(19)

Europäisches
Patentamt
European
Patent Office
Office européen
des brevets

(11)     **EP 1 941 610 B1**

(12)                          **EUROPEAN PATENT SPECIFICATION**

(45) Date of publication and mention
of the grant of the patent:
**22.04.2009 Bulletin 2009/17**

(51) Int Cl.:
**H02P 27/08** (2006.01)     **H02P 7/29** (2006.01)
**B60H 1/00** (2006.01)

(21) Application number: **06810003.1**

(22) Date of filing: **02.10.2006**

(86) International application number:
**PCT/IT2006/000699**

(87) International publication number:
**WO 2007/046120 (26.04.2007 Gazette 2007/17)**

(54) **ACTUATOR FOR AUTOMOTIVE CLIMATIZATION UNITS**

AKTOR FÜR KRAFTFAHRZEUGKLIMATISIERUNGSEINHEITEN

ACTIONNEUR POUR UNITES DE CLIMATISATION D'AUTOMOBILES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.10.2005 IT MC20050112**

(43) Date of publication of application:
**09.07.2008 Bulletin 2008/28**

(73) Proprietor: **MES S.A.**
**6855 Stabio (CH)**

(72) Inventor: **ORSETTI, Carlo**
**I-60025 Loreto (IT)**

(74) Representative: **Baldi, Claudio**
**Viale Cavallotti, 13**
**60035 Jesi (AN) (IT)**

(56) References cited:
**EP-A- 1 434 338          DE-A1- 10 302 673**
**US-A- 4 088 933          US-A- 5 990 654**
**US-A- 6 078 154          US-B1- 6 175 272**
**US-B1- 6 321 031**

EP 1 941 610 B1

Printed by Jouve, 75001 PARIS (FR)

# EP 1 941 610 B1

## Description

The present patent application refers to an actuator for automotive climatization units.

As it is known, an automotive climatization unit uses a corresponding actuator, which basically consists in a gear motor powered with low voltage (12 or 24 V) and direct current, designed to drive into rotation the flaps used to mix the hot and cold air flows, according to the temperature selected by the user.

In order to mix the air flows as desired, the actuator is driven by an electronic control unit installed in the vehicle control panel.

Although this consolidated technology is fully satisfactory from the functional viewpoint, it is impaired by a rather disturbing disadvantage.

Reference is made to the noise produced in current climatization units when actuators start the flaps used for air mixing.

In particular, this noise, which is technically defined as "tack noise", consists in a sort of repeated clicks produced when, at the end of their rotation, the flaps stop in the position selected by the control unit by means of a dedicated software application.

For better illustration purposes, it must be said that tack noise is produced in case of climatization units provided with potentiometric actuators, that is to say actuators equipped with a potentiometer to give any rotation angle to the flaps, from "all open" to "all closed" position.

The software application used to manage the control unit that drives the potentiometric actuator uses a direct current system that, in proximity of the stop position of the flaps, as selected from time to time by the user, generates a high number of close pulses in order to allow the flap to reach the desired stop with maximum accuracy.

More precisely, thanks to the actuator, the control unit drives the flaps by making "adjustments" at the end of rotation. This is true when the end of rotation coincides with the stop imposed by the actuator or climatization unit structure, and also when the end of rotation corresponds to random positions in the movement range covered by the actuator.

The close pulses generated by the direct current system (that are necessary to adjust the position of the flaps near the stop) are responsible for the production of the disturbing tack noise.

A careful examination of the climatization units that are currently available on the market has shown that the noise generated by the close pulses sent to the "actuator-flap" assembly is strictly related with the amplitude and slope of the pulses, which are in turn imposed by the fact that traditional actuators for climatization units use an electrical motor powered with direct current.

Starting from this consolidated technological overview, the_ specific purpose of the present invention is to considerably reduce the noise in automotive climatization units, by modifying the characteristics of the electrical pulses that are necessary to stop the flaps, which are directly responsible for the generation of tack noise.

The said purpose is achieved by the new actuator, because of its capacity to convert the said pulses into signals with lower amplitude and tower slope on leading edges.

This modification has been achieved by providing the electric motor used by the actuator of the invention with operation at a voltage lower than 12V.

It must be noted that the lower voltage at the ends of the said motor is due to the drop caused by the electronic device of the invention; it being understood that the voltage delivered by the control unit remains unchanged.

Moreover, the device of the invention is able to modify the slope on voltage leading edges, generating an ascending ramp that is interrupted largely before voltage reaches its maximum potential level.

Because of this, pulses are less sharp and less intense, and therefore more suitable to reduce tack noise, which becomes almost imperceptible.

It must be noted that, in order to achieve the aforementioned solution, some important technical-functional limitations have been addressed.

As a matter of fact, compliance with the said limitations was the only way to integrate the new actuator of the invention with traditional automotive climatization units from the technical-functional and physical-structural viewpoints.

The following three limitations were encountered and complied with during the development of the device of the invention: the first limitation refers to the fact that the actuator of the invention must cooperate with a traditional control unit that operates with 12/24V direct current; the second limitation refers to the fact that shape and dimensions must be the same as traditional actuators; and finally, the third limitation refers to the fact that performance must be the same as existing actuators.

This description continues with the illustration of the specific inventive idea that has permitted to achieve the aforementioned purpose, while complying with the said limitations in a practical and efficacious way.

The inventive idea consists in the use of an electronic device able to modify the voltage of the signal from the control unit and, at the same time, in the use of an electric motor able to operate with modified voltage compared to standard 12/24V:

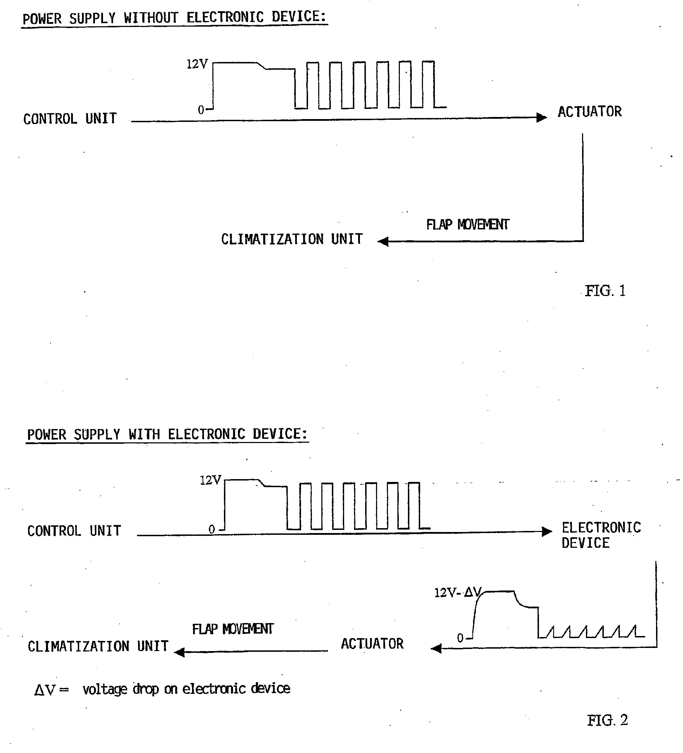

For a better understanding of the logic principle of the present invention, reference is made to the two diagrams of figures 1 and 2 contained in the first drawing enclosed to this description.

Figure 1 shows a diagram that illustrates the supply modes for successive pulses of the electrical motor provided in a traditional actuator.

Figure 2 shows a diagram that illustrates the supply modes for successive pulses of the electric motor provided in the new actuator of the invention. Evidently, these modes are remarkably different, thanks to the presence of the said electronic device used to modify the operating voltage.

A comparison between the two diagrams shows that the electronic device of the invention makes two modifications on the standard voltage delivered by the corresponding control unit.

The first modification refers to the reduction of the maximum voltage reached by each individual pulse; the second modification refers to the ramp angle of each individual pulse.

The voltage reduction is the consequence of the ramp angle variation, due to the fact that the pulses generated by the control unit have a very limited duration, which does not allow the gradually ascending voltage to reach its maximum potential value.

In particular, figure 1 shows that, according to the prior technique, the pulses generated by the control unit normally have a vertical ascending ramp, which corresponds to the instantaneous voltage increase from zero to maximum value.

As shown in Figure 2, the train of pulses from the control unit is modified by the electronic device of the invention, in such a way that each pulse has an ascending ramp with sloped profile that is interrupted at considerably lower voltage values compared to maximum potential voltage.

The other drawings enclosed to this description, which are intended for purposes of illustration only and not in a limiting sense, contain four additional figures that are used to illustrate the present invention in detail.

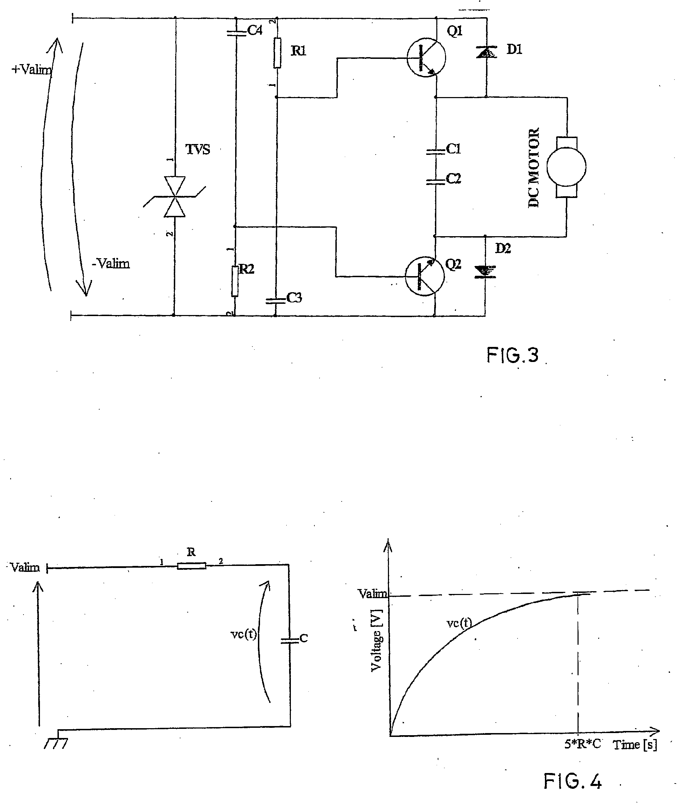

According to a preferred embodiment, the actuator of the invention is provided with the electronic device shown in figure 3, having the following operating modes.

The device (circuit) powers the motor of the actuator according to a predefined voltage ramp.

Every time the actuator is switched on, the device generates a start ramp to the ends of the motor.

The circuit elements that generate the supply ramp with suitable power are the two transistors Q1 and Q2, which are responsible for starting the motor in clockwise and anti-clockwise direction, respectively (naturally assuming the use of bidirectional motors).

In order to generate the start ramp, the two transistors must be suitably controlled in base.

The branches from series R1- C3 and C4 - R2 are responsible for this task for clockwise and anti-clockwise starts, as shown in the diagrams of figure 4.

As it is known, in a series circuit composed of a resistance R and an initially discharged condenser C, powered with voltage step $V_{alim}$, a current transient is created, which charges the condenser in a time that depends on R and C values; the term "voltage step" refers to the fact that voltage is zero until to; with $t>t_0$ voltage is $V_{alim}$ non-zero. (This translates in analytical terms the typical start by means of ideal switch, in which voltage goes from 0 to $V_{alim}$ at $t_0$ with slope dV/dT = infinity).

In particular, voltage vc at the ends of the condenser (which determines the charge of the condenser itself), gradually increases over time according to a ramp that can be mathematical expressed as follows:

## Equation 1: Transient R - C

$$v_c(t) = V_{alim} \cdot \left(1 - e^{\frac{1}{RC}t}\right)$$

After a time of about $5 \cdot R \cdot C$, the condenser is considered to be charged and the $V_c$ value can be approximated with $V_{alim}$.

Likewise, in the circuit shown in figure 3 in R1 and C3, an analogous transient is created when the actuator is powered with a positive voltage step.

Voltage in C3 ($V_{C3}$) follows the progress of Equation 1 shown in the diagram of figure 4.

By controlling in base Transistor Q1 with $V_{C3}$, also the voltage of the motor, which is connected to the emitter of Q1, has the same progress as $V_{C3}$ except for the base-emitter voltage drop of the transistor and the direct voltage drop of diode D2 (mesh C3, $V_{base-emettitore}$, Motor, D2).

In this way, current flows through transistor Q1 to the motor and closes on the power supply system through diode D2.

During the time with a positive voltage at the actuator ends, D1 and Q2 do not conduct because of inverse polarity.

After time 5-R1-C3 has elapsed, the motor is powered with constant voltage with $V_{alim}$ value, without voltage drops on diode D2 and without the collector-emitter voltage drop of transistor Q1.

When voltage is interrupted in the actuator, condenser C3 and C4 discharge on the motor, preventing voltage to sharply fall to zero.

When voltage in the actuator is negative **(-$V_{alim}$)**, operation is the same as above, except for the fact that the components involved in the motor start are C4, R2, Q2, D1, While Q1 and D2 are prohibited because of inverse polarity.

Branch R2 C4 suffers the current transient and transistor Q2 is controlled with voltage in C4 ($v_{C4}$).

When voltage is interrupted, C4 and C3 discharge on the motor again. In addition to the aforementioned elements, other components were introduced in the circuit with protection and anti-interference functions.

TVS is the component responsible for protecting the circuit against impulsive overvoltage.

C1 and C2 are used to reduce radiofrequency emissions generated by the motor brushes.

Although the embodiment shown in figure 3 is the preferred embodiment of the electronic circuit used in the new actuator of the invention, alternative constructive solutions are possible, using, in principle, any circuit referable to an active or passive filter, of any kind, or any circuit in which, given an input signal having a waveform with square amplitude and variable frequency, an attenuated signal similar to the signals obtained by the aforementioned embodiment is produced.

In particular, some filters may be a valid alternative solution to the device of the invention, due to the fact that, if powered with a voltage step, their output response is a voltage ramp comparable to the voltage ramp of the device illustrated in figure 4 (one input for signal and one output for modified signal, i.e. signal without some harmonic components, may be identified in filter).

Consequently, tack noise can be also eliminated by using the said filters.

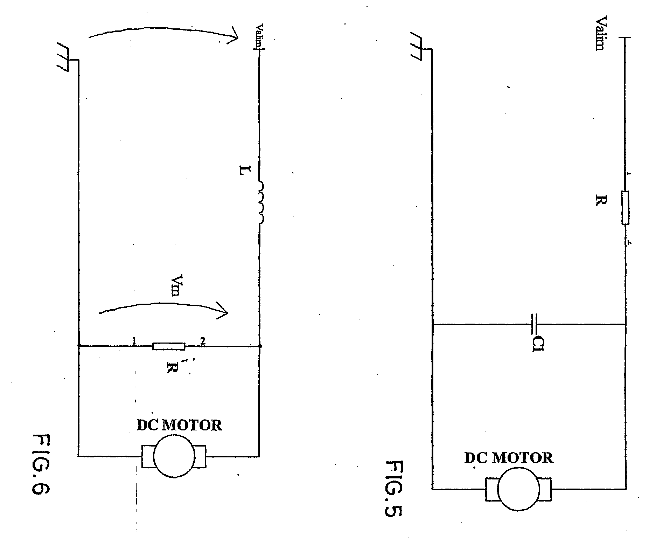

Reference is made to figures 5 and 6, which expressly illustrate two additional constructive solutions of the same device.

With reference to figure 5, a first alternative solution to the circuit of figure 3 can be represented by a passive low-pass filter R - C .

In fact, by supplying the circuit R - C with a voltage step, the voltage on condenser follows the ramp illustrated in equation 1 above.

By connecting the motor in parallel to the condenser, the motor is powered by a ramp, and not by a voltage step, with consequent reduction of start noise.

As an additional alternative solution, a passive low-pass filter R - L (with inductor-based operation) can be used, as shown in figure 6.

With reference to the said figure, the motor current can be neglected, being modest.

In these conditions, if the circuit is submitted to a voltage step, the inductor current grows as follows:

## Equation 2: Transient R - L

$$i_L(t) = \frac{V_{alim}}{R} \cdot \left(1 - e^{-\frac{R}{L} \cdot t}\right)$$

If we calculate the voltage reaching the motor $v_m$, we obtain:

## Equation 3: Filter R – L output voltage

$$v_m = R \cdot i$$

$$v_m = V_{alim} \cdot \left(1 - e^{-\frac{R}{L} \cdot t}\right)$$

This ramp is similar to the ramp of the Filter R - C circuit of figure 5.

R and L can be dimensioned in order to obtain the desired start transient.

Finally, it must be said that by increasing the number of inductors and condenser, high order filters are used..

By increasing the order, the capacity to modify the input step in a more or less sloping ramp is increased.

Also active filters, filters with active elements as transistors and operational amplifiers can be successfully applied to the motor.

The device shown in figure 3 can be considered as part of the latter family.

The number of filters that can be obtained by combining inductors, condensers and active elements to obtain filters or devices able to convert input voltage steps into ramps, or referable to ramps, is very high and it would be very difficult to represent them all.

However, the devices obtained in this way are to be considered conceptually similar to the one illustrated in figure 3.

## Claims

1. Actuator for automotive climatization units, of the type comprising an electric motor designed to drive into rotation flaps used to mix hot and cold air flows, according to the temperature selected by the user, said electric motor is designed to be driven by a series of voltage pulses of predetermined duration supplied by an electric control unit with direct current and low voltage,
   **characterised in that**
   said actuator is provided with an electronic device disposed between said electronic control unit and said motor to drive said motor with a train of voltage pulses,
   said electronic device having a time constant larger than the duration of the voltage pulses supplied by said electronic control unit, in such a way that said pulse train, outputting from said electronic device, has a rising edge defined by the time constant of the electronic device and a vertical falling edge, so that the maximum value of each pulse outputting from said electronic device is determined by the duration of the pulse and this is less than the amplitude of the pulses supplied by said electronic control unit

2. Actuator as defined in claim 1, **characterised in that** the electronic device is composed of a filter with active elements, such as transistors and operational amplifiers.

3. Actuator as defined in claim 2, **characterised in that** the electronic device comprises transistors Q1 and Q2, resistances R1 and R2, diodes D1 and D2, four condensers C1, C2, C3, C4 connected according to the electrical diagram of figure 3.

4. Actuator as defined in claim 1, **characterised In that** the electronic device consists in a passive low-pass filter R - C.

5. Actuator as defined in claim, 1 **characterised in that** the electronic device consists in a passive low-pass filter R - L.

## Patentansprüche

1. Stellglied für Klimatisierungsgruppen für Fahrzeuge, das einen Elektromotor umfasst, der dazu dient, die zur Mischung von Kalt- und Warmluftstrom verwendeten Leitbleche je nach der vom Benutzer eingestellten Temperatur in Rotation zu versetzen,
   wobei der Elektromotor dazu dient, von einer Reihe von Spannungsimpulsen zuvor festgelegter Dauer betätigt zu werden, die von einem Steuergehäuse zur Elektroversorgung mit Niederspannungsgleichstrom abgegeben werden,
   **dadurch gekennzeichnet, dass**
   das Stellglied eine Elektronikvorrichtung zwischen dem Versorgungssteuergehäuse und dem Motor vorsieht, um den Motor mit einem Impulszug zu betätigen,
   die Elektronikvorrichtung, deren Zeitkonstante länger als die Dauer der vom Elektroversorgungssteuergehäuse abgegebenen Impulse ist, damit der von der Elektronikvorrichtung ausgehende Impulszug eine von der Zeitkonstanten der Elektronikvorrichtung definierte Anstiegsfront und eine vertikale Abstiegsfront besitzt, damit der Höchstwert eines jeden von der Elektronikvorrichtung abgegebenen Impulses von seiner Dauer bestimmt wird und kleiner als die Amplitüde der vom Elektroversorgungssteuergehäuse abgegebenen Impulse ist.

2. Stellglied gemäß Anspruch 1, **dadurch gekennzeichnet, dass** die Elektronikvorrichtung aus einem Filter mit aktiven Elementen wie Transistoren und Operationsverstärkern besteht.

3. Stellglied gemäß Anspruch 2, **dadurch gekennzeichnet, dass** die Elektronikvorrichtung die Transistoren Q1 und Q2, die Widerstände R1 und R2, die Dioden D1 und D2 sowie vier Kondensatoren C1, C2, C3, C4 umfasst, die gemäß dem Schaltplan in Figur 3 angeschlossen sind.

4. Stellglied gemäß Anspruch 1, **dadurch gekennzeichnet, dass** die Elektronikvorrichtung aus einem passiven Tiefpassfilter R - C besteht.

5. Stellglied gemäß Anspruch 1, **dadurch gekennzeichnet, dass** die Elektronikvorrichtung aus einem passiven Tiefpassfilter R - L besteht.

**Revendications**

1. Actuateur pour groupes de climatisation installés à bord de véhicules à moteur, du type comprenant un moteur électrique destiné à activer en rotation des déflecteurs utilisés pour mélanger les flux d'air chaud et froid, en fonction de la température sélectionnée par l'utilisateur,
   le dit moteur électrique étant apte à être actionné par une série d'impulsions de tension ayant durée préfixée, impulsions fournies par une centrale d'alimentation électrique à courant continu et à faible tension,
   **caractérisé en ce que**
   le dit actuateur prévoit un dispositif électronique disposé entre la dite centrale d'alimentation électrique et le dit moteur, en mesure d'activer le dit moteur avec un train d'impulsions,
   le dit dispositif électronique ayant une constante de temps majeure de la durée des impulsions de tension fournies par la dite centrale d'alimentation électrique, de manière que le dit train d'impulsions, sortant du dit dispositif électronique, a une façade de montée définie par la constante de temps du dispositif électronique et une façade de descente verticale, de manière à ce que la valeur maximum de chaque impulsion qui sort du dit dispositif électronique est déterminée par l'amplitude de l'impulsion et est mineure à la grandeur des impulsions fournies par la dite centrale d'alimentation électrique.

2. Actuateur selon la revendication 1, **caractérisé en ce que** le dit dispositif électronique est constitué d'un filtre ayant des éléments actifs, tels que transistors et amplificateurs opérationnels.

3. Actuateur selon la revendication 2, **caractérisé en ce que** le dit dispositif électronique comprend des transistors Q1 et Q2, des résistances R1 et R2, des diodes D1 et D2, quatre condensateurs C1, C2, C3, C4 connectés selon le schéma électrique dont à la figure 3.

4. Actuateur selon la revendication 1, **caractérisé en ce que** le dit dispositif électronique est constitué d'un filtre passif passe-bas R - C.

5. Actuateur selon la revendication 1, **caractérisé en ce que** le dit dispositif électronique est constitué d'un filtre passif passe-bas R - L.

**POWER SUPPLY WITHOUT ELECTRONIC DEVICE:**

CONTROL UNIT ———————————————————→ ACTUATOR

12V

0

CLIMATIZATION UNIT ←——— FLAP MOVEMENT ———

FIG. 1

**POWER SUPPLY WITH ELECTRONIC DEVICE:**

CONTROL UNIT ———————————————————→ ELECTRONIC DEVICE

12V

0

CLIMATIZATION UNIT ←——— FLAP MOVEMENT ——— ACTUATOR ←——— 

12V-$\Delta$V

0

$\Delta$V = voltage drop on electronic device

FIG. 2

FIG.3

FIG.4

Valim

R

C1

DC MOTOR

FIG.5

Valim

L

Vm

R

2

1

DC MOTOR

FIG.6